# EUROPEAN PATENT SPECIFICATION

(11) **EP 3 555 429 B1**
(45) Date of publication and mention of the grant of the patent: **15.07.2020**
(21) Application number: 17703542.5
(22) Date of filing: 19.01.2017
(51) Int. Cl.: F01D 25/30, F02K 1/46

(54) **EXHAUST SYSTEM FOR A GAS TURBINE ENGINE**
ABGASSYSTEM FÜR EINEN GASTURBINENMOTOR
SYSTÈME D'ÉCHAPPEMENT POUR UN MOTEUR DE TURBINE À GAZ

(43) Date of publication of application: 23.10.2019
(73) Proprietor: Siemens Aktiengesellschaft, 80333 München (DE)
(72) Inventor: THIRUMURTHY, Deepak, Mount Vernon, Ohio 43050 (US)
(74) Representative: Isarpatent
(86) International application number: PCT/US2017/014107
(87) International publication number: WO 2018/136066

(56) References cited:
- EP-A2- 0 984 152
- EP-A2- 1 561 939
- US-A1- 2015 000 292
- US-A1- 2015 086 339
- US-A1- 2016 376 909

## Description

### BACKGROUND

### 1.Field

Disclosed embodiments are generally related to land based gas turbine engines and more particularly to the exhaust system used in land based gas turbine engines.

### 2. Description of the Related Art

A gas turbine engine typically has a compressor section, a combustion section having a number of combustors and a turbine section. Ambient air is compressed in the compressor section and conveyed to the combustors in the combustion section. The combustors combine the compressed air with a fuel and ignite the mixture creating combustion products. The combustion products flow in a turbulent manner and at a high velocity.

The combustion products are routed to the turbine section via transition ducts. Within the turbine section are rows of vane assemblies. Rotating blade assemblies are coupled to a turbine rotor. As the combustion products expand through the turbine section, the combustion products cause the blade assemblies and turbine rotor to rotate. The turbine rotor may be linked to an electric generator and used to generate electricity. As a result of this activity exhaust products are produced.

During the operation of gas turbine engines managing the exhaust products of the gas turbine engine is important.

In EP 1 561 939 A2 a gas turbine engine exhaust nozzle is disclosed which includes a row of laterally sinuous chevrons extending from an aft end of an exhaust duct. The chevrons have radially outer and inner surfaces bound by a laterally sinuous trailing edge extending between a base of the chevrons adjoining the duct and an axially opposite apex of the chevrons. Each chevron has a compound arcuate contour both axially and laterally, and the sinuous trailing edge of the chevrons further compounds the arcuate configuration of each chevron.

Further, in EP 0 984 152 A2 a gas turbine engine exhaust nozzle for suppressing jet noise is disclosed. The nozzle has an arrangement of tabs that extend in radially inward and outward directions. The tabs cause the formation of vortices.

In US 2016/376909 A1 an airflow control system for a combined cycle power generation system is disclosed which comprises: an airflow generation system for attachment to a rotatable shaft of a gas turbine system, the airflow generation system drawing in an excess flow of air through an air intake section; a mixing area for receiving an exhaust gas stream produced by the gas turbine system; and an air extraction system for extracting at least a portion of an excess flow of air generated by the airflow generation system to provide bypass air, and for diverting the bypass air into the mixing area to reduce a temperature of the exhaust gas stream; wherein the reduced temperature exhaust gas stream is provided to a heat recovery steam generator.

### SUMMARY

Briefly described, aspects of the present disclosure relate to the exhaust system within land based gas turbine engines. However, concepts discussed herein are also applicable to marine based gas turbine engines.

An aspect of the disclosure as claimed in claim 1 is a gas turbine engine comprising a gas turbine engine having a turbine section; an exhaust system connected to the turbine section, wherein the exhaust system comprises; a volute for receiving an exhaust fluid flow, wherein the exhaust fluid flow moves through volute channels to a volute transition duct, wherein the volute transition duct has a perimeter forming a volute outlet, wherein the perimeter is formed from a plurality of chevrons; and a stack surrounding the volute transition duct wherein the exhaust fluid flow exiting from the volute outlet mixes with ventilation fluid flow as the exhaust fluid flow moves through the stack thereby forming a combined fluid flow.

### BRIEF DESCRIPTION OF THE DRAWINGS

Fig. 1 shows a cross sectional view through a portion of a gas turbine engine.
Fig. 2 shows an exhaust system used in a gas turbine engine
Fig. 3 shows a schematic version of the exhaust system.
Fig. 4 shows a view of an alternative embodiment of the exhaust system.
Fig. 5 shows a view of an alternative embodiment of the exhaust system.

### DETAILED DESCRIPTION

To facilitate an understanding of embodiments, principles, and features of the present disclosure, they are explained hereinafter with reference to implementation in illustrative embodiments. Embodiments of the present disclosure, however, are not limited to use in the described systems or methods.

Regarding the exhaust systems of land based gas turbine engines the inventor recognized that conventional volute based exhaust systems have rotating vortices with high-velocity flow at the volute outlet. These interact with ventilation flow within the gas turbine engine. The interaction of the flows results in velocity and temperature distortion which needs further conditioning for the efficient operation of the downstream systems. The inventor also recognized that gas turbine engines need increased entrainment of the ventilation flow into the exhaust gases so that the combined flow can be ejected without ventilation fans, however typically this is not sufficient.

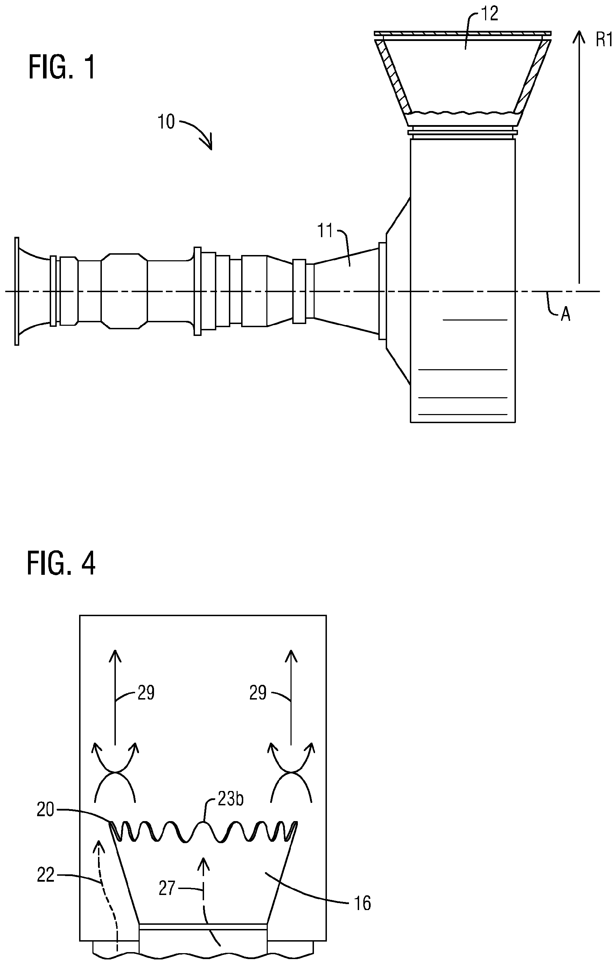

Fig. 1 shows a cross sectional view through a portion of a gas turbine engine 10. The cross sectional view shows where the turbine section 11 is connected to the exhaust system 12. During operation of the gas turbine engine 10 fluid flows move downstream following the longitudinal axis A from the turbine section 11 to the exhaust system 12. Once fluid flows move into the exhaust system 12 the fluid flows ultimately move in a radial direction R1 away from the axis of the gas turbine engine 10. As used herein "upstream" and "downstream" are used to refer to the fluid flows as they move through the gas turbine engine 10, where the fluid flows move from upstream to downstream through the gas turbine engine 10. "Fluid flows" refer to flows of air and/or fuel.

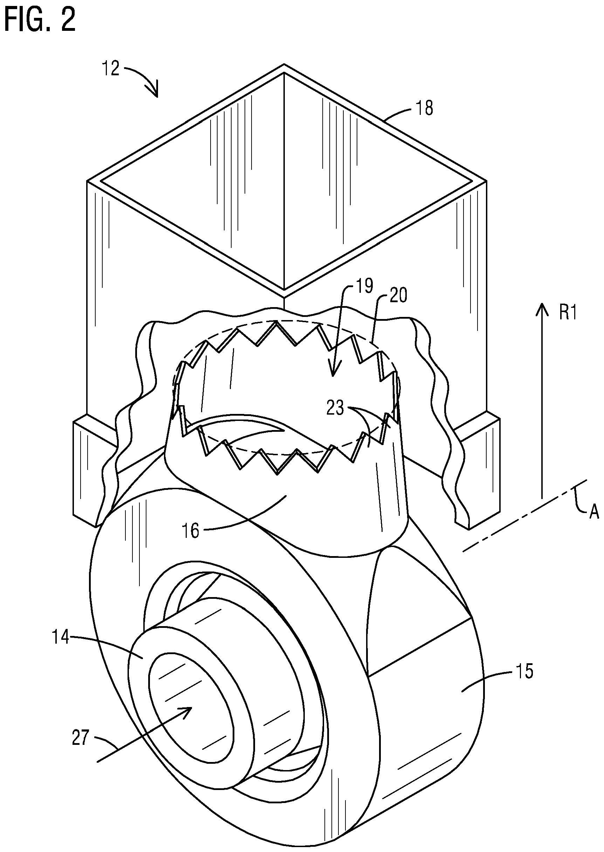

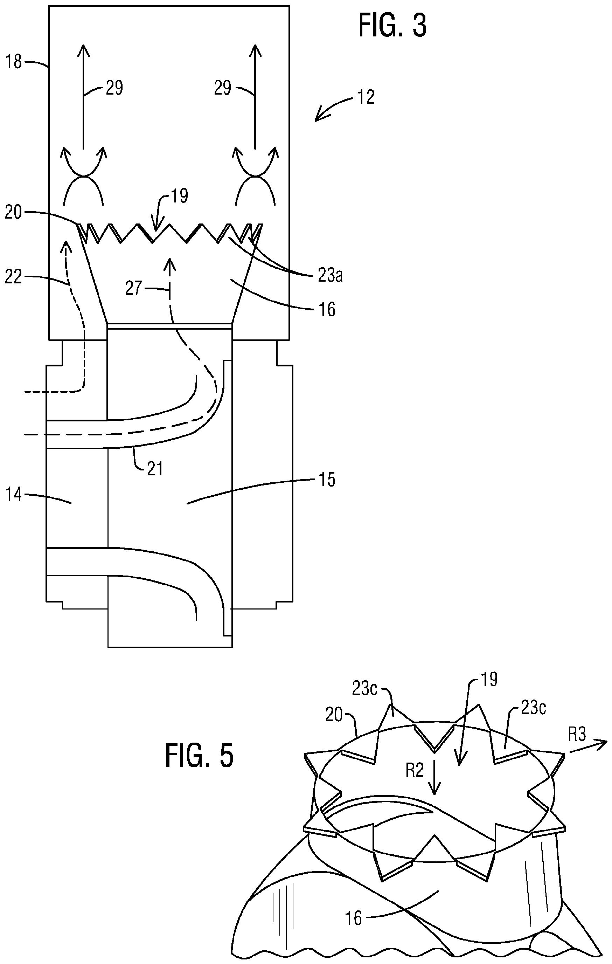

Turning to Figs. 2 and 3, exhaust system 12 is shown. The exhaust system 12 has a volute 15 that receives an exhaust fluid flow 27 from the exhaust inlet 14. The exhaust fluid flow 27 comes from the turbine section 11. Once the exhaust fluid flow 27 enters the exhaust inlet 14 it moves through volute channels 21 towards volute transition duct 16. The movement of the exhaust fluid flow 27 through the volute channels 21 may comprise circumferential and radial components as it moves outwards towards the volute transition duct 16. This type of movement through the volute channels generates vortices as it moves up through the volute transition duct 16.

As the exhaust fluid flow 27 moves radially outwards it moves towards volute outlet 19 which is formed by a perimeter 20 of chevrons 23a. The exhaust fluid flow 27 then moves into the stack 18 which surrounds the volute transition duct 16.

The volute 15 may also be surrounded by a housing 13 that encases the gas turbine engine 10. A ventilation fluid flow 22 moves within the housing 13 along the gas turbine engine 10. Where the housing 13 is connected to the stack 18 a ventilation fluid flow 22 may move along the outside of the volute 15 and the volute transition duct 16. The ventilation fluid flow 22 is typically of a lower temperature than the exhaust fluid flow 27. When the ventilation fluid flow 22 mixes with the exhaust fluid flow 27 the combined fluid flow has a lower overall temperature.

The volute transition duct 16 has a perimeter 20 that is formed from a plurality of chevrons 23a. The chevrons 23a forming the perimeter 20 in Fig. 3 are triangular shaped with flattened apexes. Each of the chevrons 23a is extending in the same direction as another one of the chevrons 23a in Fig. 3. In Fig. 3 the direction in which each of the chevrons 23a extends is radially outwards R1 with respect to the longitudinal axis A of the gas turbine engine 10. While the chevrons 23a shown in Figs. 2 and 3 have flattened apexes they may be formed having rounded apexes as well depending on the desired mixing of the ventilation fluid flow 22 with the exhaust fluid flow 27.

The volute transition duct 16 is conically shaped. The perimeter 20 that forms the volute outlet 19 in Figs. 2 and 3 has generally circular shape. While a circular volute outlet 19 is shown it should be understood that other shapes may be used, such as rectangular, oval or polygonal. Additionally, while the volute transition duct 16 is shown as being conical shaped, other shapes may be employed for the volute transition duct 16, such as rectangular, etc. In Figs. 2 and 3, the radius of the volute transition duct 16 increases as it extends in the radial outward direction R1 with respect to the longitudinal axis A. It should be understood that in those situations where the volute transitional duct 16 is other than conically shaped the width of the volute transition duct 16 may increase as it extends radially outwards away R1 from the longitudinal axis A of the gas turbine engine 10.

The plurality of chevrons 23a creates increased mixing and entrainment of the exhaust fluid flow 27 and the ventilation fluid flow 22 for the forming of the combined fluid flow 29. The mixing that occurs reduces the temperature of the exhaust fluid flow 27 quicker than it occurs in standard systems. The increase of the mixing and entrainment of the exhaust fluid 27 with the ventilation fluid flow 22 further facilitates the movement of the exhaust fluid flow 27 with the combined fluid flow 29 through the stack 18.

The reduction of the temperature and the increase of movement of the exhaust fluid flow 27 with the bleed fluid flow 22 reduces or eliminates the need for ventilation fans in the exhaust system 12 since the combined fluid flow 29 facilitates exhaust removal.

Additionally the use of leak detectors may be altered so that fuel leak detectors can be moved closer to the volute outlet 19 due to the reduction in temperature of the exhaust fluid flow 27. This is because leak detectors should be positioned to avoid excessive temperatures which can result in failure of the leak detectors. The movement of leak detectors closer to the volute outlet 19 can provide a more rapid response to the existence of a leak in the gas turbine engine 10.

Another benefit of having a reduced temperature for the exhaust fluid flow 27 is that the thermal stresses that can impact components of the gas turbine engine 10 are reduced. This may increase the overall lifespan of the gas turbine engine 10.

Additionally, the use of the chevrons 23a may alter the noise signature spectrum typically generated by the movement of the exhaust fluid flow 27 into the stack 18.

Turning to Fig. 4, an alternative embodiment is shown that uses curved chevrons 23b. The chevrons 23b are different in that they form a sinusoidal pattern for the perimeter 20. The sinusoidal pattern can be used to change the shape of the vortices that are formed, which in turn can be tailored to provide more or less mixing and alteration of noise signatures. The sinusoidal pattern formed provides a different type of mixing for the exhaust fluid flow 27 and the ventilation fluid flow 22. In some instances chevrons 23b may be alternated with chevrons 23a in order to form the perimeter 20.

Turning to Fig. 5, another embodiment is shown that uses chevrons 23c. The chevrons 23c are shown alternating from one chevron 23c oriented so that it extends radially inward R2 with respect to the circle formed by the perimeter 20 while the other chevron 23c is oriented so that it extends radially outward R3 with respect to the circle formed by the perimeter 20. By having the chevrons 23c oriented in this manner the overall mixing of the exhaust fluid flow 27 with the ventilation fluid flow 22 can be increased. While the chevrons 23c are shown alternating back and forth it should be understood that other patterns of chevrons 23c may be used, for instance there may be two chevrons 23c that extend radially inward R2 and then two chevrons 23c that extend radially outward R3. Furthermore the chevrons 23c may extend radially inward R2 and radially outward R3 at different angles.

The use of various chevron patterns for the exhaust system 12 can be employed to mix the exhaust fluid flow 27 with the ventilation fluid flow 22 in the housing 13 of the gas turbine engine 10 for forming the combined fluid flow 29. Each pattern can impact the mixing in different ways and can be selected based upon the speed and temperature of the exhaust fluid flow 27. In addition to the temperature benefits that can be provided by the mixing that occurs, there can also occur a reduction in the noise generated thereby reducing structural wear and tear that occurs during the operation of the gas turbine engine 10.

While embodiments of the present disclosure have been disclosed in exemplary forms, it will be apparent to those skilled in the art that many modifications can be made therein without departing from the scope of the invention as set forth in the following claims.

## Claims

1. A gas turbine engine comprising:
a turbine section (10);
an exhaust system (12) connected to the turbine section (10), wherein the exhaust system (12) comprises;
a volute (15) for receiving an exhaust fluid flow (27), wherein the exhaust fluid flow (27) moves through volute channels (21) to a volute transition duct (16), wherein the volute transition duct (16) has a perimeter (20) forming a volute outlet (19), wherein the perimeter (20) is formed from a plurality of chevrons (23a); and
a stack (18) surrounding the volute transition duct (16) wherein the exhaust fluid flow (27) exiting from the volute outlet (19) mixes with ventilation fluid flow (22) as the exhaust fluid flow (27) moves through the stack (18) thereby forming a combined fluid flow (29).

2. The gas turbine engine of claim 1, wherein adjacent chevrons (23c) from the plurality of chevrons (23c) extend in alternating directions with respect to a longitudinal axis of the gas turbine engine.

3. The gas turbine engine of either claim 1 or 2, wherein the volute outlet (19) is circular and one of the plurality of chevrons (23c) extends in a radially inward direction and another of the plurality of chevrons extends in a radially outward direction (23c).

4. The gas turbine engine of claim 1, wherein each of the chevrons (23a) extends in the same direction with respect to an axis of the gas turbine engine.

5. The gas turbine engine of claim 1, wherein one of the plurality of chevrons (23c) extends in a different direction with respect to an axis of the gas turbine engine than another of the plurality of chevrons (23c).

6. The gas turbine engine of claim 1, wherein the volute outlet (19) is circular and one of the plurality of chevrons (23c) extends in a different radial direction than another of the plurality of chevrons (23c).

7. The gas turbine engine of claim 1, wherein the plurality of chevrons (23b) have a sinusoidal pattern.

8. The gas turbine engine of any one of claims 1-7, wherein each of the plurality of chevrons (23b) form a triangle shape with a rounded top.

## Patentansprüche

1. Gasturbinenmotor, Folgendes umfassend:
einen Turbinenabschnitt (10);
ein Abgassystem (12), das mit dem Turbinenabschnitt (10) verbunden ist, wobei das Abgassystem (12) Folgendes umfasst:
eine Schnecke (15), um einen Abgasfluidstrom (27) aufzunehmen, wobei sich der Abgasfluidstrom (27) durch Schneckenkanäle (21) zu einer Schneckenübergangsleitung (16) bewegt, wobei die Schneckenübergangsleitung (16) einen Rand (20) aufweist, der einen Schneckenauslass (19) ausbildet, wobei der Rand (20) aus mehreren Zacken (23a) ausgebildet ist; und
einen Schacht (18), der die Schneckenübergangsleitung (16) umgibt, wobei sich der Abgasfluidstrom (27), der aus dem Schneckenauslass (19) austritt, mit dem Lüftungsfluidstrom (22) vermischt, wenn sich der Abgasfluidstrom (27) durch den Schacht (18) bewegt, und dadurch einen kombinierten Fluidstrom (29) ausbildet.

2. Gasturbinenmotor nach Anspruch 1, wobei sich aneinander angrenzende Zacken (23c) der mehreren Zacken (23c) in abwechselnde Richtungen in Bezug zu einer Längsachse des Gasturbinenmotors erstrecken.

3. Gasturbinenmotor nach Anspruch 1 oder 2, wobei der Schneckenauslass (19) kreisförmig ist und sich eine der mehreren Zacken (23c) radial nach innen erstreckt und sich eine andere der mehreren Zacken (23c) radial nach außen erstreckt.

4. Gasturbinenmotor nach Anspruch 1, wobei sich alle Zacken (23c) in Bezug zu einer Achse des Gasturbinenmotors in dieselbe Richtung erstrecken.

5. Gasturbinenmotor nach Anspruch 1, wobei sich eine der mehreren Zacken (23c) in Bezug zu einer Achse des Gasturbinenmotors in eine andere Richtung als eine andere der mehreren Zacken (23c) erstreckt.

6. Gasturbinenmotor nach Anspruch 1, wobei der Schneckenauslass (19) kreisförmig ist und sich eine der mehreren Zacken (23c) in eine andere radiale Richtung als eine andere der mehreren Zacken (23c) erstreckt.

7. Gasturbinenmotor nach Anspruch 1, wobei die mehreren Zacken (23b) ein sinusförmiges Muster aufweisen.

8. Gasturbinenmotor nach einem der Ansprüche 1-7, wobei jede der mehreren Zacken (23b) eine Dreiecksform mit einer abgerundeten Spitze ausbildet.

## Revendications

1. Moteur à turbine à gaz comprenant :
une section turbine (10) ;
un système d'échappement (12) raccordé à la section turbine (10), dans lequel le système d'échappement (12) comprend :
une volute (15) destinée à recevoir un flux de fluide d'échappement (27), dans lequel le flux de fluide d'échappement (27) se déplace à travers des canaux de volute (21) vers un conduit de transition de volute (16), dans lequel le conduit de transition de volute (16) présente un périmètre (20) formant une sortie de volute (19), dans lequel le périmètre (20) est formé d'une pluralité de chevrons (23a) ; et
une cheminée (18) entourant le conduit de transition de volute (16), dans lequel le flux de fluide d'échappement (27) sortant de la sortie de volute (19) se mélange à un flux de fluide de ventilation (22) à mesure que le flux de fluide d'échappement (27) se déplace à travers la cheminée (18), formant ainsi un flux de fluide combiné (29).

2. Moteur à turbine à gaz selon la revendication 1, dans lequel des chevrons adjacents (23c) parmi la pluralité de chevrons (23c) s'étendent dans des directions alternées par rapport à un axe longitudinal du moteur à turbine à gaz.

3. Moteur à turbine à gaz selon la revendication 1 ou 2, dans lequel la sortie de volute (19) est circulaire et l'un de la pluralité de chevrons (23c) s'étend dans une direction radiale vers l'intérieur et un autre de la pluralité de chevrons (23c) s'étend dans une direction radiale vers l'extérieur.

4. Moteur à turbine à gaz selon la revendication 1, dans lequel chacun des chevrons (23a) s'étend dans la même direction par rapport à un axe du moteur à turbine à gaz.

5. Moteur à turbine à gaz selon la revendication 1, dans lequel l'un de la pluralité de chevrons (23c) s'étend dans une direction par rapport à un axe du moteur à turbine à gaz différente de celle d'un autre de la pluralité de chevrons (23c) .

6. Moteur à turbine à gaz selon la revendication 1, dans lequel la sortie de volute (19) est circulaire et l'un de la pluralité de chevrons (23c) s'étend dans une direction radiale différente de celle d'un autre de la pluralité de chevrons (23c) .

7. Moteur à turbine à gaz selon la revendication 1, dans lequel les chevrons de la pluralité de chevrons (23b) présentent un motif sinusoïdal.

8. Moteur à turbine à gaz selon l'une quelconque des revendications 1 à 7, dans lequel chacun de la pluralité de chevrons (23b) forme un triangle doté d'un sommet arrondi.
